Europäisches Patentamt

**European Patent Office**

**Office européen des brevets**

(11) Publication number : **0 334 533 B1**

# EUROPEAN PATENT SPECIFICATION

(45) Date of publication of patent specification :
**14.10.92 Bulletin 92/42**

(51) Int. Cl.⁵ : **G01F 23/22,** G01F 23/28,
G01F 23/04

(21) Application number : **89302507.2**

(22) Date of filing : **14.03.89**

(54) **Fibre optic discrete or continuous liquid level sensor.**

(30) Priority : **15.03.88 US 168481**
**30.12.88 US 292111**

(43) Date of publication of application :
**27.09.89 Bulletin 89/39**

(45) Publication of the grant of the patent :
**14.10.92 Bulletin 92/42**

(84) Designated Contracting States :
**CH DE FR GB IT LI NL SE**

(56) References cited :
**US-A- 4 403 826**
**US-A- 4 440 022**

(73) Proprietor : **IMO INDUSTRIES Inc.**
**3450 Princeton Pike**
**Lawrenceville, New Jersey 08648 (US)**

(72) Inventor : **Snow, James W.**
**35 Sunrise Hill**
**Bedford Nova Scotia, B4A 2Z6 (CA)**
Inventor : **Colbourne, Paul D.**
**3 Fernhill Drive Apt. 33**
**Dartmouth Nova Scotia, B3A 4K1 (CA)**

(74) Representative : **Spall, Christopher John et al**
**BARKER, BRETTELL & DUNCAN 138 Hagley**
**Road**
**Edgbaston Birmingham B16 9PW (GB)**

## Description

This invention relates to a method and apparatus for optically detecting a liquid level or other physical parameters.

## Background of the Invention

Conventionally, the level of a liquid in a vessel is detected using a float with a mechanical or magnetic coupling to an external gauge, an ultrasonic or optical transducer which measures time of flight to deduce the liquid level, or a parallel wire capacitance sensor which monitors the change in the dielectric constant between the wires associated with a change in liquid level.

The application of fibre optics to level sensing in liquids is well documented. The principal advantages of this type of level sensor are its passivity, i.e., no moving or mechanical parts, and its intrinsic dielectric properties which mean no spark hazard when used with combustible fluids and virtually zero susceptibility to electromagnetic interference. The more common implementations use small prisms mounted at the end of two optical fibres, a conically shaped optical fibre tip, or a U-shaped bent optical fibre [Canadian Patent 1102151] (devices of these types are described for example in the article "Experimental Investigations on Fibre Optic Liquid Level Sensors and Refractometers" by K. Spenner et al. - IEE OFS 221 pages 96-99). In all instances, the optical fibre probe or sensor is suspended or made to protrude into the vessel, and the potentially fragile sensor is exposed to damage by floating debris, vibration, and dynamic effects during filling. The potential for damage is increased if routine maintenance of the sensor is required due to biological or chemical fouling of the optical surface.

Other level sensors utilizing fibre optics are found, for example, in U.S. Patents 3,995,168 to Neuscheler et al. and 4,440,022 to Masom.

The fibre optic sensors just described are primarily for discrete level measurement, eg., to sense whether the vessel is empty or full at some intermediate point. A multiplicity of such point sensors is operable and is suggested but generally represents an impractical configuration for a continuous liquid level measure. A continuous measure is desirable, however, for improved resolution in many applications. Consider the case of an aircraft fuel gauging system. The dielectric properties of the optical fibre sensor are desirable from the point of view of safety with respect to spark hazard and lightning strikes but high resolution and accuracy are also desirable so that excess fuel quantities would not have to be carried thus reducing aircraft weight and consequently fuel consumption. Present day aircraft fuel level sensors are for the most part capacitance type sensors which lose accuracy when the fuel becomes laden with water and the dielectric constant is changed significantly.

Only one continuous fibre optic liquid level sensor has been found reported thus far. It is "Fibre Optic Fluid Level Sensor" by M. Belkerdid, N. Ghanderharioun, and B. Brennan in the Proceedings of SPIE Conference 566 Fibre Optic and Laser Sensors III (1985) pages 153-158. Based on the bending or cladding loss principle, it consists of large loops of a single fibre, the loops being of ever increasing diameter, which are suspended in the liquid. Here again, the sensor packaging is not sufficiently robust for most applications.

Another patent of interest is U.S. Patent 4 403 826 which teaches a detection optical fibre, the core of which contains fluorescing material. On exposure to ultraviolet light, depending on the position of a sleeve during calibration, or some other means or parameter during actual measurement, the fluorescent material will fluoresce and conduct light to a detector. The intensity and distribution of ultraviolet light can be used, for example, in industrial monitoring of materials and processing, etc.

## Summary of the Invention

The present invention as claimed in claim 1 overcomes the problems of the prior art in that the optical fibres are embedded in an optically transparent substrate material that provides for protection of the sensor and also provides a surface which can be cleaned. This same packaging geometry can be applied both to a discrete (i.e., point) liquid level sensor and to a continuous or analog liquid level sensor.

It is well known that the relative refractivity and hence the critical angle of total reflection at an interface is dependent on the indices of refraction of the two media forming the interface. This is more often referred to as Snell's law, $n_1\sin\theta_1 = n_2\sin\theta_2$, which describes the relationship between the angles of incidence $\theta_1$ and refraction $\theta_2$ for a light ray propagating in a medium of refractive index $n_1$, incident on a medium of refractive index $n_2$. Using this equation it is evident that for $n_1$ $\nu_2$ τηερε ισ α λιμιτινγ ανγλε οφ ινχιδενχε χαλλεδ τηε χριτιχαλ ανγλε, γιϖεν βψ τηε αρχσινε οφ τηε ρατιο οφ τηε ρεφραχτιϖε ινδιχεσ, βεψονδ ωηιχη τοταλ ιντερναλ ρεφλεχτιον οχχυρσ.

In this discussion, the terms "liquid" and "air" are used to refer to any two fluids of sufficiently different refractive indices to be sensed by this refractometric technique. Hence "air" might equally well refer to the gaseous phase of the sensed liquid or to another liquid as in the case of oil and water. Similarly, the term "optical fibre" is used to describe any elongated light conducting body or light guide capable of conveying light by multiple internal reflections.

The continuous liquid level sensors described herein consist of two optical fibres, a source or transmit optical fibre having one end adapted to be optically connected to an external light source, and a detector or receive optical fibre having one end adapted to be optically connected to an external light detector. The source and detector optical fibres each have at least the other end thereof embedded in an optically clear substrate material or window that is in contact with the liquid to be sensed such that the light exiting the source fibre is incident on the substrate to liquid or air interface at an angle between the critical angle for the liquid and the critical angle for air. The substrate or window material has a refractive index equal or nearly equal to that of the core of the optical fibre so that the maximum refractive index mismatch will occur at the interface to the liquid. The detector fibre is doped so as to fluoresce when light of specific wavelength(s) impinges thereon. The fluorescent detector fibre is mounted within the substrate so that it can receive any light from the source which is internally reflected from the interface. Hence a received light signal will occur at the external light detector only when a portion of the sensor is exposed to air. When a fluid of higher refractive index such as water or gasoline is present at the liquid sensing surface, the substrate - liquid interface becomes primarily transmissive and only a small amount of light is reflectively coupled from the source fibre to the detector fibre. In this way, the optical signal detected from the detector fibre is related to the height of the liquid sensing surface which is immersed.

In any case, a mechanism can be easily included to provide for detection of any failure in the sensor's optical path from and including the light source to the detector.

The device may be made to measure parameters other than fluid level (such as displacement, temperature, pressure, etc.) by the addition of a sleeve external to the substrate, the motion of which is driven by the change in the parameter to be measured. The sleeve would cause variation in the output signal by the same reflection/refraction principle described above.

In summary of the above the present invention may be considered as providing an indicating device for indicating the level of fluids in a container, comprising at least two optical fibres having at least a portion thereof embedded in a transparent substrate material of similar refractive index, one of the fibres being optically connected to a light source and being capable of emitting a particular wavelength or range of wavelengths of light along its length, the other fibre being optically connected to a light detector and being doped so as to fluoresce when illuminated by light at the wavelength(s) emitted by the source fibre, the two optical fibres being orientated with respect to the substrate-fluid interface so that light exiting the source fibre is coupled into the detector fibre when total internal reflection occurs at the substrate-fluid interface in the presence of a first fluid, and coupling does not occur in the presence of a second fluid of higher refractive index than the first fluid.

## Brief Description of the Drawings

This invention will be described in more detail hereinafter in connection with the accompanying drawings in which:

**Figure 1** is a perspective view of a discrete or point sensor illustrating principles on which the invention is based;

**Figures 2A and 2B** are side views of the discrete fibre optic liquid level sensor shown in Figure 1, showing the cases of total internal reflection (Fig. 2A) and refraction (Fig. 2B) in the presence of air and liquid respectively;

**Figure 3A** is a plan view of the fluorescent-fibre continuous liquid level sensor of the present invention;

**Figure 3B** is a perspective view of the invention of Fig. 3A;

**Figure 4** describes the principle of operation of the fluorescent detector optical fibre shown in Figure 3;

**Figure 5** shows the cases of total internal reflection and refraction in the presence of air and liquid respectively for the invention depicted in Figure 3;

**Figures 6, 7 and 8** show additional embodiments of the fluorescent-fibre configuration;

**Figure 9** shows a general view of the fluorescent-fibre continuous level sensor configured as a cylindrical probe;

**Figure 10** is similar to Figure 9 except that the source optical fibre is replaced with a bundle of optical fibres;

**Figure 11** shows a level sensor using two sources and two detectors; and

**Figure 12** shows a sensor in which a plurality of source fibres is arranged at different levels within the substrate.

## Description of the Preferred Embodiment

### (a) Discrete Level Sensor

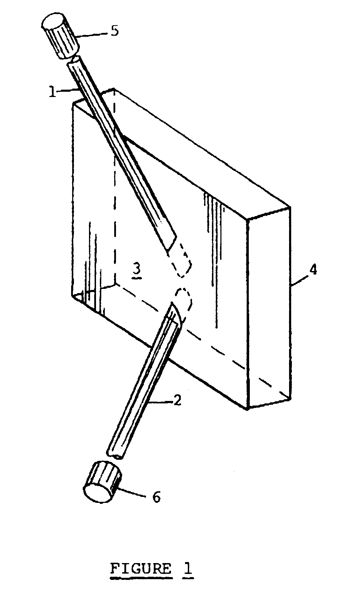

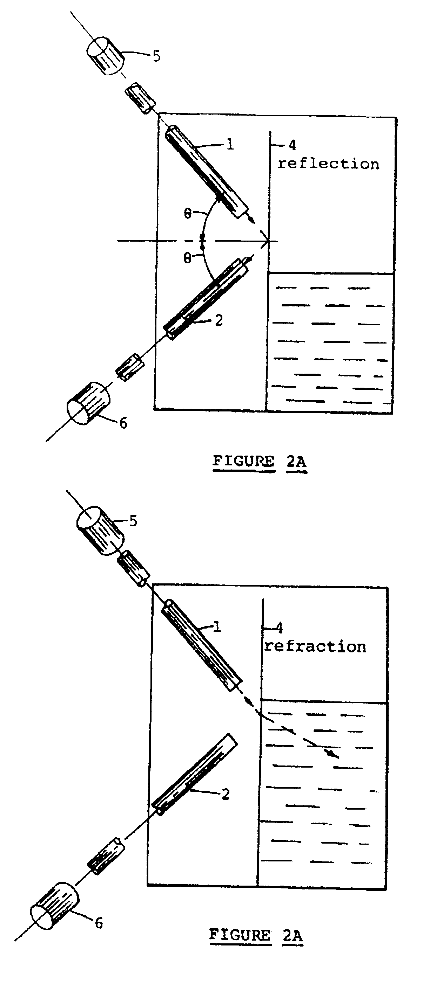

Referring to the drawings, in the discrete or point sensor shown in Figures 1 and 2, a source optical fibre 1 is optically coupled to a light source 5 such as a light emitting diode or laser diode and a detector optical fibre 2 is optically coupled to a light detector 6 such as a photodiode or phototransistor. The fibres 1 and 2 are mounted in an optically transparent substrate 3 in the same plane normal to the planar interface surface 4 and at an equal angle θ to the normal such that the angle of incidence equals the angle of reflection. The optical fibre ends may be polished using standard lapping film techniques or may be simply cleaved or cut, and mounted in blind holes in which some fluid or epoxy, of a refractive index which matches that of the optical fibre core material and the substrate material, has been placed to minimize any optical loss due to the refractive index mismatch, i.e., Fresnel loss. The blind end of each hole is normally as close to the interface surface 4 as possible to minimize the optical loss of the effectively unguided light due to the effective end separation of the optical fibres. In the case of a substrate material with a refractive index 1.5 as would by typical of glass or nylon or some other plastic, and where the liquid is water with a refractive index of 1.33 above which is air with a refractive index of 1.00, the critical angles for total internal reflection are 41.8 degrees and 62.5 degrees for air and water respectively. Hence, if the optical fibres are positioned between these two critical angles, e.g., at 45 degrees with respect to the normal and in the same plane such that the angle of incidence of the light exiting the source optical fibre onto the window to liquid interface equals the angle of reflection and of the detector optical fibre, then in the presence of air, total internal reflection will occur and the light detector 6 will be illuminated signifying an "on" or low level condition (Fig. 2A). When the liquid is present, the light exiting the source fibre will be largely refracted into the liquid and the light detector 6 will be dark, indicating an "off" or high level condition (Fig. 2B).

A multiplicity of such point detectors can be ganged together to approximate continuous level detection.

## (b) Continuous Level Sensor Using Fluorescence

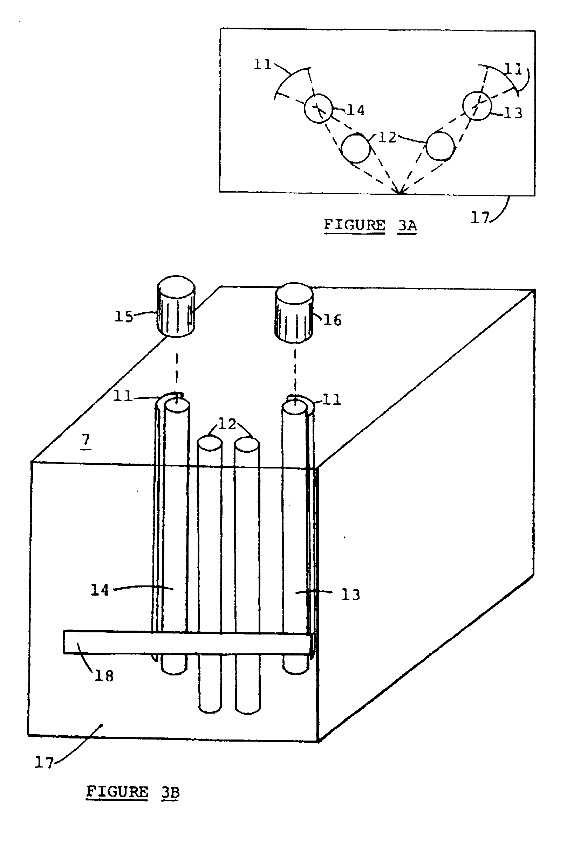

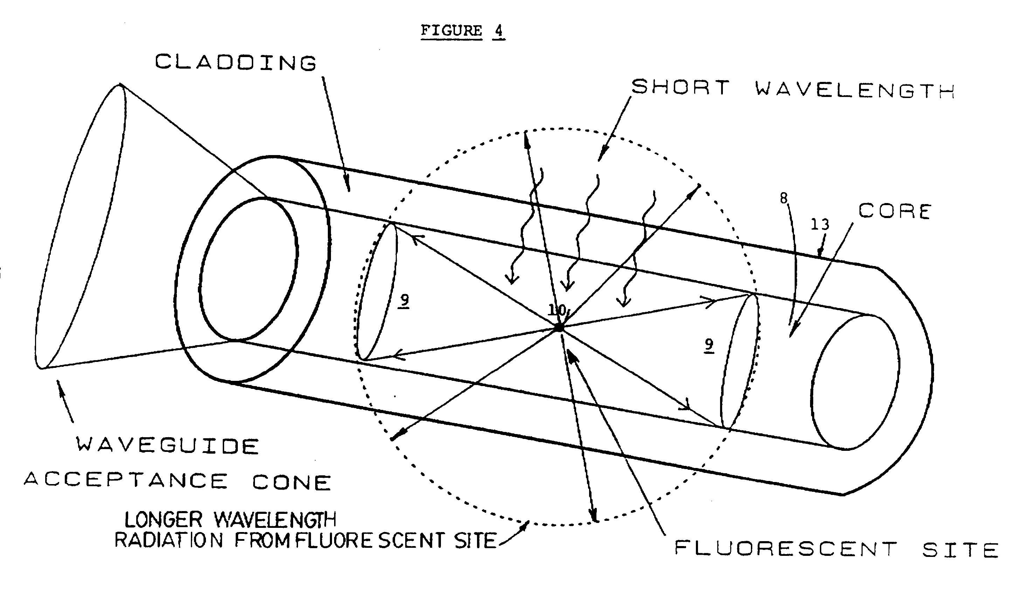

A truly continuous liquid level sensor can be fabricated with a somewhat different optical fibre arrangement based on the same optical principle and a similar packaging arrangement. In the continuous liquid level sensor as shown in Figures 3A and 3B, the source optical fibre 14 and the detector optical fibre 13 are embedded longitudinally in the optically transparent substrate material 7. The two optical fibres are parallel or nearly parallel to one another and to the planar sensor window 17. In addition, a radius from each of the two fibres intersects at or near the sensor window 17 according to the basic laws of reflection. Referring now to Figure 4, the core 8 of the detector optical fibre 13 is doped with a fluorescent substance which when irradiated or excited with a short wavelength optical source, re-emits light of a longer wavelength. Normally, light passing transverse to and through an optical fibre, that is an unguided light, is not coupled into the optical waveguide because its angle of incidence exceeds the critical angle defined by the core and cladding refractive indices. However, in the fluorescent optical fibre, the fluorescent sites (10) in Figure 4 emit spherically; a portion of this longer wavelength emission as denoted by the cones of light 9 in Figure 4 will remain as guided light in the detector optical fibre's core, and will propagate to both ends of the optical fibre, at least one end of which has been adapted to optically connect to an external light detector (16 in Figure 3B) such as a photodiode.

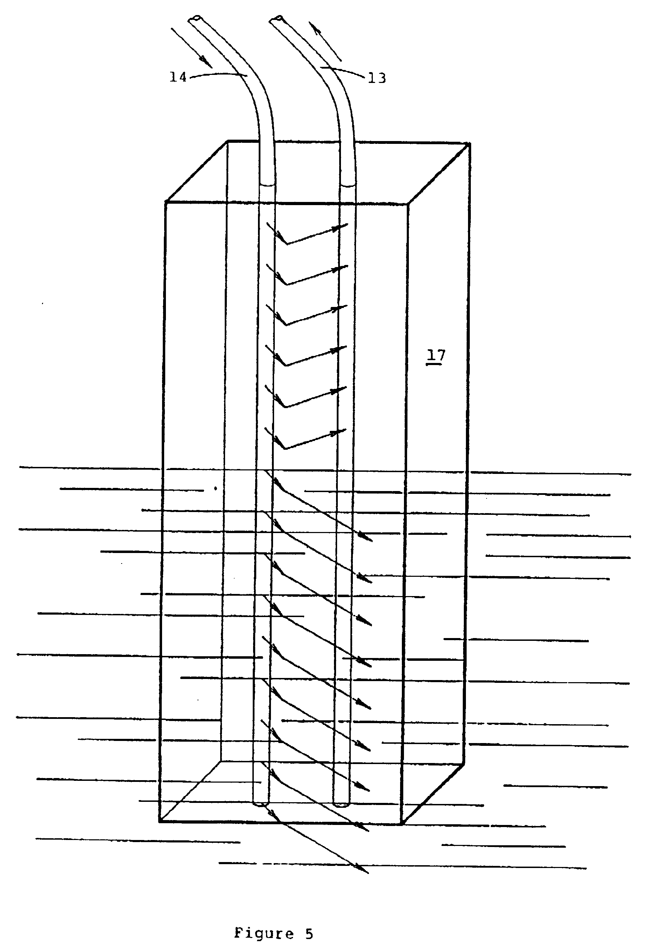

Referring again to Figure 3B, the source fibre 14 is optically connected at one or both ends to an external light source 15 which may be a laser diode or flash tube such as a xenon strobe light, either of which has some wavelength or colour component matched to the fluorescence excitation. The source fibre is configured so that light is lost or emitted along its length thus creating an optical line source. This can be achieved by having the fibre abraded or scratched or modified to include a longitudinal strip of higher refractive index than that of the core. Another means of "leaking" the light from the fibre is to arrange it in a series of microbends. With mirrors or reflective gratings 11 and lenses 12 to redirect the light exiting the source fibre into a more radial and focused direction, that direction being between the critical angles for air and the liquid to be sensed and along the intersecting radii noted previously, the line source fibre 14 illuminates the fluorescent detector optical fibre 13 via total internal reflection as in the previous embodiment, the incident light being proportional to the length of the sensor face which is exposed to the air as shown in Figure 5. This incident light stimulates a proportional fluorescence signal in the detector optical fibre which is then guided to the external light detector. The light from the line source optical fibre emitted below the liquid's level is refracted into the liquid and does not propagate to the fluorescent fibre where it would contribute to the fluorescence signal. The resulting optical signal received at the light detector corresponds inversely with the liquid level.

The lenses 12 as shown in Figure 3 are convex or cylindrical positive, which is suitable for the case where the refractive index of the lens is greater than that of the medium. If the reverse were true the lenses would be concave or cylindrical negative.

If a portion of the continuous sensor can be protected from other than total internal reflection such as with a mirrored reflecting surface (18 in Figure 3B) on the window interface to the liquid, then a light signal offset will always be present at the light detector which can be used to indicate the integrity of the optical link from and including the light source to the light detector. Any failure in this link will be instantly detectable thus providing a self checking feature. Placement of the reflector 18 at the base of the assembly permits it to monitor the integrity of the sensor as well as that of the optical link.

Performance of the sensor assembly in Figure 5 can be improved by constructing the substrate 17 in a series of horizontal slices or laminates 19 coated with an opaque material 20 as seen in Figure 6. The result is alternating layers of clear and opaque material such that only light rays propagating near the horizontal direction are allowed to travel to the detector fibre, giving enhanced accuracy of level detection.

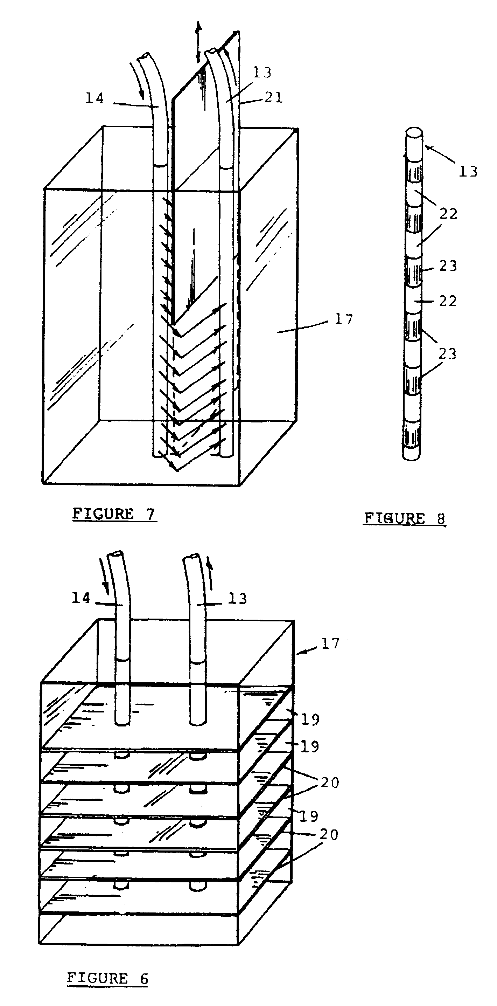

Another improvement is the addition of a vertically mounted spacer 21 of opaque material placed between the source 14 and detector 13 fibres in order to prevent direct propagation of light between them. Hence the only light that propagates to the detector is that which has been reflected from the window 17 (see Figure 7).

The sensor can be made to measure parameters other than liquid level. If the vertical spacer 21 described above is allowed to slide vertically in response to an externally applied force, the light output signal will be analogous to the amplitude of the force or displacement. Parameters such as temperature and pressure could be measured by causing the motion of the slide in response to the deflection of a bimetallic element or diaphragm.

If it were desired to measure liquid quantity as opposed to level in odd shaped tanks, the relative positions of the source and detector fibres could be arranged such as to give a stronger signal (e.g., fibres closer together) in parts of the tank having larger surface area and hence representing greater liquid quantity.

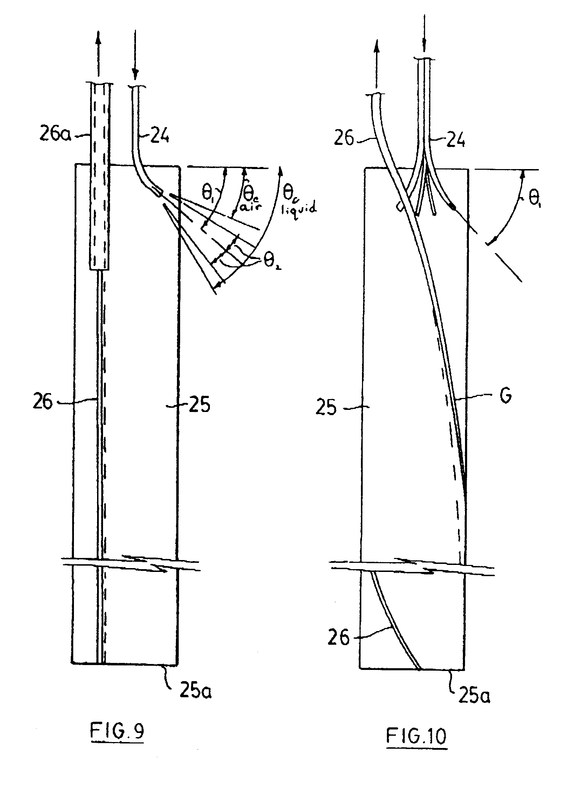

A stepwise or "digital" output could be achieved by replacing the detector fibre 13 with a fibre made up of a series of fluorescent fibre segments 22 joined by non-fluorescent fibre segments 23 as shown in Figure 8. Such an arrangement would be tolerant to signal variations imposed by varying environmental conditions, as the presence of a signal within a certain range would be known to indicate a specific level. A stepwise output could also be achieved by retaining the fluorescent detector fibre but replacing the continuous source fibre with a series of fibres of different lengths (one terminating at each "step"). The fibres could share a common optical source. The output would give a "count" of the number of source fibres exposed and hence indicate the liquid level. Either of these step-output arrangements could be arranged non-linearly to provide liquid quantity measurement (as opposed to level) in irregularly shaped tanks as described above.

## (c) Cylindrical Probe Using Fluorescence

Figure 9 shows an embodiment of the fluorescent-fibre sensor wherein the fibres are built into a cylindrical waveguide to provide a rugged and easily-cleaned probe. The source optical fibre 24 is inserted in the substrate at an angle $\theta_1$ to illuminate the inner surface of the substrate 25. The numerical aperture (NA) of the source fibre is given by $n_s \sin \theta_2$ where $n_s$ is the refractive index of the substrate. The source fibre NA should be chosen so that $2\theta_2 \leq [ (\theta_c)_{liquid} - (\theta_c)_{air}]$, for maximum sensor efficiency. Then the angle

$\theta_1$ is chosen such that $\theta_1 - \theta_2$ is greater than the critical angle for air and $\theta_1 + \theta_2$ is less than the critical angle for the liquid to be sensed.

If air is present at the surface of the substrate, the light is totally internally reflected as in any optical waveguide and propagates toward the opposite end of the sensor. If liquid is present at the surface, some or all of the light is refracted out and lost.

The fluorescent detector optical fibre 26 intercepts a fraction of the light which is totally internally reflected resulting in an optical intensity output at the end of the detector fibre which increases continuously according to the length of the substrate which is above the liquid level. Although the sensor may have a square or rectangular cross section, in the preferred embodiment, the substrate waveguide is circular and a bundle of optical source fibres is splayed radially as seen in Figure 10 to illuminate the core of the sensor as uniformly as possible and the fluorescent fibre 26 is embedded in the substrate near its surface, along the sensor's length. This ensures that the predominant skew rays are detected unless refracted away into the liquid. A detector fibre along the axis of the sensor would be susceptible only to the fewer meridional rays and the sensor would not be as sensitive. The detector fibre should be shrouded as at 26a in Figure 9 near the top of the sensor in the region where the substrate surface is not yet fully and uniformly illuminated.

If the detector fibre 26 is laid in a helical groove G in the substrate as seen in Figure 10, the pitch of the helix can be varied, i.e., decreased, along the length of the sensor to offset any attenuation of the optical source along the sensor's length or to provide a linear response for irregular tank shapes. A longitudinal linear lay of the detector fibre as shown in Figure 9 may, however, facilitate manufacturability of the sensor.

If the end 25a of the substrate 25 is made to be reflecting, then when the fluid level falls below the end 25a of the substrate 25, the light from the fibre or fibres 24 will propagate along the entire length of the substrate 25, be reflected by the mirrored end 25a, and propagate back up the substrate 25. The fluorescence induced in the fibre 26 will thus increase abruptly due to illumination by both the downward propagating and upward propagating light in the substrate 25 when the entire substrate 25 is out of the fluid. If any portion of the substrate 25 is surrounded by fluid, the light will be refracted out of the substrate 25 and will not reach the end 25a. The mirrored end 25a thus can provide a large "empty tank" signal when the sensor is used to measure fluid level in a tank.

If the end 25a is made to be non-reflecting, then the induced fluorescence will continue to increase smoothly near the bottom of the sensor. This would simplify linearization of the sensor output.

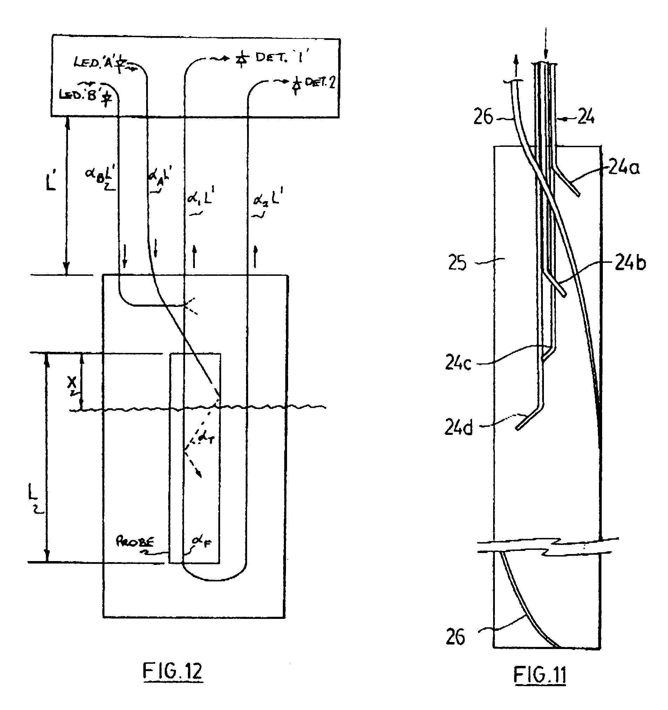

A stepwise or "distal" output could be obtained by retaining the fluorescent detector fibre but changing the arrangement of the source fibres in the bundle 24 such that each source fibre 24a, b, c, d... terminates at a different distance along the length of the substrate (Figure 11). The output would thereby give a "count" of the number of source fibres exposed and hence indicate the level. Either of those step-output arrangements could be arranged non-linearly to provide liquid quantity measurement (as opposed to level) in irregularly shaped tanks.

In the course of presenting the preferred embodiment of the invention, certain background assumptions have been made regarding components that are common to fibre optic devices. For example, as discussed earlier, the light source may be a light emitting diode, laser diode, flash tube such as a xenon strobe or a more conventional source. The detector may be a photodiode, phototransistor or photomultiplier. Some fluid or epoxy, of a refractive index which matches that of the optical fibre core material and the substrate material, may be placed in the holes or grooves in the substrate which contains the fibres, thereby minimizing any optical loss due to refractive index mismatch (Fresnel loss).

### (d) Lead Fibre Insensitivity

The continuous level sensor described herein is an intensity-type sensor, since the intensity of the fluorescent signal indicates the liquid level. Intensity type sensors are sensitive to changes in source intensity, detector responsivity, or attenuation in the optical fibres and connectors leading to and from the sensor, all of which will affect the detected optical intensity. It is often impossible to tell the difference between one of the changes listed and a real change of the measured quantity. However, variations in lead fibre attenuation cannot be tolerated by the sensor, as previously described, if the light source and light detector are remote from the sensor. Special techniques must be used to eliminate the sensitivity to lead fibre attenuation.

Techniques which have been used in the past to reduce lead fibre sensitivity include multiple pass pulses, wavelength referencing, polarization, Doppler few mode, and reference path techniques. Of these, only wavelength referencing can be easily applied to the present invention with the penalty being the addition of various couplers and wavelength multiplexers. A reflection/transmission technique using two light sources and two detectors has recently been reported by Beheim and Anthan (Applied Optics, vol.27.No.13 1 July, 1988, pages 2767,2775). This technique can be modified for use with the fluorescent fibre fuel probe as follows.

In this method, two outputs are required which have different intensity vs. liquid level curves. For the rod type probe of Figure 9 or 10, suitable outputs are the top and bottom ends of the fluorescent fibre. These two outputs behave differently because of the self-attenuation of the fluorescent fibre (the attenuation of the fluorescence signal as it propagates in the fluorescent fibre). In addition, two inputs are required which case different responses at the outputs. One input can be the normal source fibre. The second input can be a fibre simply butted perpendicularly against the fluorescent fibre outside the liquid-sensing portion of the probe. The resulting configuration is shown in Figure 12.

To take a reading, the procedure is to first turn on source B only, and measure $P_{1B}$ and $P_{2B}$, the optical powers at detectors 1 and 2 respectively. Then turn on source A and measure $P_{1A}$ and $P_{2A}$. The quantity

$$Y = \frac{P_{1B} \, P_{2A}}{P_{1A} \, P_{2B}} \quad \text{(Equation I)}$$

is then calculated, which varies monotonically with the fuel level x and is independent of the attenuations in all four lead fibres. The theoretical expression for Y is,

$$Y = \left( \frac{\alpha_T + \alpha_F}{\alpha_T - \alpha_F} \right) \left( \frac{1 - e^{-(\alpha_T - \alpha_F)x}}{1 - e^{-(\alpha_T + \alpha_F)x}} \right) \quad \text{(Equation II)}$$

where $\alpha_T$ is the attenuation coefficient for pump light travelling down the probe, and $\alpha_F$ is the self-attenuation coefficient of the fluorescent fibre. As the level x changes so will the quantity Y and it is an easy enough exercise, perhaps accomplished by a microcomputer, to calculate and display the fuel level x, using the equations above.

### Claims

1. An indicating device for indicating the level of fluids in a container, comprising at least two optical fibres having at least a portion thereof embedded in a transparent substrate material of similar refractive index, one of said fibres being optically connected to a light source and being capable of emitting a particular wavelength or range of wavelengths of light along its length, the other fibre being optically connected to a light detector and being doped so as to fluoresce when illuminated by light at the wavelength(s) emitted by said source fibre, the two optical fibres being oriented with respect to the substrate-fluid interface so that light exiting the source fibre is coupled into the detector fibre when total internal reflection occurs at the substrate-fluid interface in the presence of a first fluid, and coupling does not occur in the presence of a second fluid of higher refractive index than the first fluid.

2. The device according to Claim 1 wherein the source and detector optical fibres are essentially parallel to each other and to the substrate-fluid interface.

3. The device according to Claim 1, characterized in that the source and detector optical fibres and the planar substrate - fluid interface are not parallel to each other, the deviation from the parallel being arranged such as to linearize the optical output in irregular-shaped tanks, thereby giving a direct measurement of liquid quantity.

4. The device according to Claim 1, characterized by the application of mirrors, reflective gratings, and/or lenses to maximize the radial optical coupling between the source optical fibre and the detector optical fibre under the condition of total internal reflection.

5. The device according to Claim 1, characterized in that a portion of the substrate's interface to the fluid is reflective such that some reflection always occurs thus providing a self checking feature.

6. The device according to Claim 4, characterized in that the lenses are convex or cylindrical positive if the lens material is of a higher refractive index than that of the substrate material.

7. The device according to Claim 4, characterized in that the lenses are concave or cylindrical negative if the lens material is of a lower refractive index than that of the substrate material.

8. The device according to Claim 1, characterised in that periodic opaque spacers segment the substrate to block shallow angle light rays exiting the source optical fibre and to prevent coupling of these light rays to the detector optical fibre by other than the primarily radial direction of total internal reflection.

9. The device according to Claim 1, characterised in that an opaque separator is provided longitudinally between the source optical fibre and the detector optical fibre to prevent any optical coupling between the two optical fibres by other than total internal reflection.

10. The device according to Claim 1 configured with a series of bundled source fibres of different lengths, the output signal from the fluorescent detector fibre varying stepwise with the fluid level.

11. The device according to Claim 1 wherein the detector fibre includes discrete fluorescent segments joined alternating with non-fluorescent segments, the output thereby varying stepwise with the fluid level, the source fibre being a single line fibre.

12. The device according to Claim 1, the fibres being arranged within the substrate such that light emitted from the source fibre illuminates the core of the substrate, which serves as a larger waveguide, and (a) is coupled into the detector fibre when total internal reflection occurs at the substrate-fluid interface, which is the case when the first fluid if relatively low refractive index is present, or (b) is not coupled into the detector fibre when refraction occurs at the substrate-fluid interface, which is the case when the second of higher refractive index, namely the fluid whose level is to be measured, is present.

13. The device of Claim 12, wherein the source fibre is made to emit a particular wavelength or range of wavelengths of light so as to excite longer wavelength fluorescene in said detector fibre only when total internal reflection occurs within the substrate.

14. The device according to Claim 13, wherein the substrate or waveguide is circular in cross section.

15. The device according to Claim 14, wherein the fluorescent detector fibre extends longitudinally of the sensor's length and is positioned eccentrically of the central axis so as to intercept the predominant skew rays.

16. The device according to Claim 14, wherein the fluorescent detector fibre extends helically along and around the sensor over its length so as to intercept the predominant skew rays.

17. The device according to Claim 16, wherein the pitch of the detector fibre helix is decreased to compensate for attenuation of the light source along the sensor's length, or is varied to provide a linear response for irregular container shapes.

18. The device according to Claim 14, wherein the fluorescent detector fibre is shrouded from the source illumination near the top of the sensor in the region where the substrate or waveguide core is not yet fully and uniformly illuminated.

19. The device according to Claim 14, wherein the end of the substrate opposite the source is mirrored to provide an abrupt increase in fluorescence when the fluid level drops below the end of the substrate.

20. The device according to Claim 14, wherein the end of the substrate opposite the source is made non-reflecting to simplify linearization requirements.

21. The device according to Claim 13, wherein the source fibre is angled such that its numerical aperture or exit cone of light satisfies the principle of total internal reflection within the substrate unless the liquid to be sensed is present.

22. The device according to Claim 14, wherein each source fibre of a bundle of source fibres is splayed radially to more uniformly illuminate the core of the substrate and increase light level for improved sensor performance.

23. The device according to Claim 15, 16 or 22 wherein the detector fibre has segments of the fluorescent-doped material separated by segments of non-fluorescent fibre.

24. The device according to Claim 22, wherein the fibres making up the source bundle are cut to different lengths and mounted at different distances along the substrate.

25. The device according to Claim 12, wherein two source fibres and two detector fibres are used to provide insensitivity to variations in lead fibre attenuation, source intensity, and detector responsivity.


**Patentansprüche**

1. Anzeigegerät zur Anzeige des Pegels von Fluiden in einem Behälter, mit zumindest zwei optischen Fibern, von denen zumindest ein Abschnitt in ein transparentes Substratmaterial mit ähnlichen Brechungsindex eingebettet ist, eine der beiden Fibern optisch mit einer Lichtquelle verbunden und so ausgebildet ist, daß sie eine bestimmte Wellenlänge oder einen Wellenlängenbereich von Licht entlang ihrer Länge aussenden kann, die andere Fiber optisch mit einem Lichtdetektor verbunden und dotiert ist, so daß sie fluoresziert, wenn sie mit Licht beleuchtet wird bei der Wellenlänge bzw. den Wellenlängen, die von der Quellenfiber emittiert werden, wobei die beiden optischen Fibern so in Bezug auf die Substrat-Fluid-Grenzfläche angeordnet sind, daß die Quellenfiber anregendes Licht in die Detektorfiber eingekoppelt wird, wenn eine innere Totalreflexion an der Substrat-Fluid-Grenzfläche in der Gegenwart eines ersten Fluids auftritt, und eine Kopplung nicht in der Gegenwart eines zweiten Fluids auftritt, welches einen höheren Brechungsindex aufweist als das erste Fluid.

2. Gerät nach Anspruch 1, bei welchem die optischen Fibern der Quelle und des Detektors im wesentlichen parallel zueinander und parallel zu der Substrat-Fluid-Grenzfläche verlaufen.

3. Gerät nach Anspruch 1, dadurch gekennzeichnet, daß die optischen Fibern der Quelle und des Detektors sowie die ebene Substrat-Fluid-Grenzfläche nicht parallel zueinander verlaufen, wobei die Abweichung gegenüber der Parallelität so ausgebildet ist, daß das optische Ausgangssignal in unregelmäßig geformten Behältern linearisiert wird, um so eine direkte Messung der Flüssigkeitsmenge zu geben.

4. Gerät nach Anspruch 1, dadurch gekennzeichnet, daß Spiegel, Reflexionsgitter, und/oder Linsen eingesetzt werden, um die radiale optische Kopplung zwischen der optischen Fiber der Quelle und der optischen Fiber des Detektors in dem Zustand der inneren Totalreflexion zu maximieren.

5. Gerät nach Anspruch 1, dadurch gekennzeichnet, daß ein Abschnitt der Grenzfläche des Substrats mit dem Fluid reflektierend ist, so daß immer eine gewisse Reflexion auftritt, wodurch eine Selbstüberprüfungseigenschaft zur Verfügung gestellt wird.

6. Gerät nach Anspruch 4, dadurch gekennzeichnet, daß die Linsen konvex oder zylindrisch positiv sind, wenn das Linsenmaterial einen höheren Brechungsindex aufweist als das Substratmaterial.

7. Gerät nach Anspruch 4, dadurch gekennzeichnet, daß die Linsen konkav oder zylindrisch negativ sind, wenn das Linsenmaterial einen niedrigeren Brechungsindex aufweist als das Substratmaterial.

8. Gerät nach Anspruch 1, dadurch gekennzeichnet, daß periodische, lichtundurchlässige Abstandsstücke das Substrat unterteilen, um Lichtstrahlen mit flachen Winkeln zu blockieren, welche die optische Fiber der Quelle anregen, und um ein Ankoppeln dieser Lichtstrahlen an die optische Fiber des Detektors durch andere Richtungen als die primäre Radialrichtung der inneren Totalreflexion zu verhindern.

9. Gerät nach Anspruch 1, dadurch gekennzeichnet, daß ein lichtundurchlässiges Trennelement längs zwischen der optischen Fiber der Quelle und der optischen Fiber des Detektors angeordnet ist, um irgendeine optische Kopplung zwischen den beiden optischen Fibern durch eine andere als die innere Totalreflexion zu verhindern.

10. Gerät nach Anspruch 1, welches mit einer Reihe gebündelter Quellenfibern unterschiedlicher Längen versehen ist, wobei das Ausgangssignal der Fluoreszenzdetektorfiber schrittweise entsprechend dem Fluidpegel variiert.

11. Gerät nach Anspruch 1, bei welchem die Detektorfiber diskrete fluoreszierende Segmente aufweist, die abwechselnd mit nicht fluoreszierenden Segmenten verbunden sind, wodurch das Ausgangssignal schrittweise mit dem Fluidpegel variiert, und die Quellenfiber eine linienförmige Fiber ist.

12. Gerät nach Anspruch 1, bei welchem die Fibern innerhalb des Substrats so angeordnet sind, daß von der Quellenfiber emittiertes Licht den Kern des Substrats beleuchtet, der als ein längerer Wellenleiter dient, und (a) in die Detektorfiber eingekoppelt wird, wenn eine innere Totalreflexion an der Substrat-Fluid-Grenzfläche auftritt, was der Fall ist, wenn das erste Fluid mit verhältnismäßig niedrigem Brechungsindex vorhanden ist, oder (b) nicht in die Detektorfiber-eingekoppelt wird, wenn eine Brechung an der Substrat-Fluid-Grenzfläche auftritt, was der Fall ist, wenn das zweite Fluid mit höherem Brechungsindex vorliegt, nämlich das Fluid, dessen Pegel gemessen werden soll.

13. Gerät nach Anspruch 12, bei welchem die Quellenfiber so ausgebildet ist, daß sie eine bestimmte Wellenlänge oder einen Wellenlängenbereich von Licht aussendet, um so eine Fluoreszenz bei längeren Wellenlängen in der Detektorfiber nur dann anzuregen, wenn innere Totalreflexion innerhalb des Substrats auftritt.

14. Gerät nach Anspruch 13, bei welchem das Substrat oder der Wellenleiter einen kreisförmigen Querschnitt aufweist.

15. Gerät nach Anspruch 14, bei welchem sich die Fluoreszenzdetektorfiber in Längsrichtung der Länge des Sensors erstreckt und exzentrisch in Bezug auf die zentrale Achse angeordnet ist, um so die hauptsächlich schrägen Strahlen abzufangen.

16. Gerät nach Anspruch 14, bei welchem sich die Fluoreszenzdetektorfiber schraubenförmig entlang des Sensors und über dessen Länge um ihn herum erstreckt, um so die hauptsächlichen Schrägstrahlen abzufangen.

17. Gerät nach Anspruch 16, bei welchem die Steigung der Detektorfiberschraube verringert ist, um die Abschwächung der Lichtquelle entlang der Länge des Sensors zu kompensieren, oder variiert ist, um eine lineare Reaktion für unregelmäßige Behälterformen zur Verfügung zu stellen.

18. Gerät nach Anspruch 14, bei welchem die Fluoreszenzdetektorfiber gegenüber der Quellenbeleuchtung nahe der Oberseite des Sensors in dem Bereich abgeschirmt ist, in welchem der Kern des Substrats oder Wellenleiters noch nicht vollständig und gleichmäßig beleuchtet wird.

19. Gerät nach Anspruch 14, bei welchem das Ende des Substrats gegenüberliegend der Quelle verspiegelt ist, um eine abrupte Erhöhung der Fluoreszenz zur Verfügung zu stellen, wenn der Fluidpegel unter das Ende des Substrats absinkt.

20. Gerät nach Anspruch 14, bei welchem das Ende des Substrats gegenüberliegend der Quelle nicht reflektierend ausgebildet ist, um Linearisationserfordernisse zu vereinfachen.

21. Gerät nach Anspruch 13, bei welchem die Quellenfiber winklig angeordnet ist, so daß ihre numerische Apertur oder ihr Austrittskegel des Lichts das Prinzip der inneren Totalreflexion innerhalb des Substrats erfüllt, es sei denn, die zu messende Flüssigkeit wäre vorhanden.

22. Gerät nach Anspruch 14, bei welchem jede Quellenfiber eines Bündels von Quellenfibern radial aufgespreizt ist, um den Kern des Substrats gleichmäßiger zu beleuchten und den Lichtpegel zu Erzielung einer verbesserten Sensorleistung zu erhöhen.

23. Gerät nach Anspruch 15, 16 oder 22, bei welchem die Detektorfiber Segmente des Fluoreszenz-dotierten Materials aufweist, die durch Segmente nicht fluoreszierender Fiber getrennt sind.

24. Gerät nach Anspruch 22, bei welchem die das Quellenbündel bildenden Fibern auf unterschiedliche Längen geschnitten und an unterschiedlichen Entfernungen entlang des Substrats angebracht sind.

25. Gerät nach Anspruch 12, bei welchem zwei Quellenfibern und zwei Detektorfibern verwendet werden, um eine Unempfindlichkeit bezüglich Variationen der Zuleitungsfiberabschwächung, der Quellenintensität, und der Detektorempfindlichkeit zur Verfügung zu stellen.

## Revendications

1. Dispositif indicateur pour indiquer le niveau de liquides dans un récipient, comprenant au moins deux fibres optiques comportant au moins une partie noyée dans un substrat transparent d'indice de réfraction similaire, l'une desdites fibres étant connectée optiquement à une source de lumière et susceptible d'émettre une longueur d'onde particulière ou une plage de longueur d'onde de lumière sur sa longueur, l'autre fibre étant connectée optiquement à un capteur de lumière et étant dopée de façon à devenir fluorescente lorsqu'elle est éclairée par de la lumière aux longueurs d'onde émises par ladite fibre connectée à la source de lumière, les deux fibres optiques étant orientées par rapport à l'interface substrat-fluide de manière que la lumière sortant de la fibre connectée à la source soit couplée à la fibre reliée au capteur lorsque la réflection totale interne se produit à l'interface substrat-fluide en présence d'un premier fluide, et que le couplage ne se produise pas en présence d'un second fluide d'indice de réfraction plus élevé que celui du premier fluide.

2. Dispositif selon la revendication 1, caractérisé en ce que les fibres connectées à la source et au capteur sont pratiquement parallèles l'une à l'autre et à l'interface substrat-fluide.

3. Dispositif selon la revendication 1, caractérisé en ce que les fibres optiques connectées à la source et au capteur et l'interface plane substrat-fluide ne sont pas parallèles les unes aux autres, l'écart de parallélisme étant aménagé de façon à linéariser la sortie optique dans le cas de réservoirs de formes irrégulières afin d'obtenir une mesure directe de la quantité de liquide.

4. Dispositif sleon la revendication 1, caractérisé par l'utilisation de miroirs, de grilles réfléchissantes et/ou de lentilles pour maximiser le couplage optique radial entre la fibre optique connectée à la source et la fibre optique reliée au capteur dans l'état de réflexion totale interne.

5. Dispositif selon la revendication 1, caractérisé en ce qu'une partie de l'interface du substrat avec le fluide est réflechissante de sorte que quelques réflexions se produisent toujours, procurant ainsi une caractéristique d'auto-contrôle.

6. Dispositif selon la revendication 4, caractérisé en ce que les lentilles sont convexes ou cylindriques convexes si le matériau de lentille est d'indice de réfraction supérieur à celui du matériau du substrat.

7. Dispositif selon la revendication 4, caractérisé en ce que les lentilles sont concaves ou cylindriques concaves si le matériau de lentille a un indice de réfraction inférieur à celui du matériau du substrat.

8. Dispositif selon la revendication 1, caractérisé en ce que des écarteurs opaques périodiques segmentent le substrat pour bloquer les rayons lumineux d'angle aigu qui sortent de la fibre optique connectée à la source et pour éviter le couplage de ces rayons lumineux à la fibre optique reliée au capteur autrement que dans la direction radiale primaire de réflexion totale interne.

9. Dispositif selon la revendication 1, caractérisé en ce qu'un séparateur opaque est disposé longitudinalement entre la fibre optique connectée à la source et la fibre optique reliée au capteur pour éviter tout couplage optique entre les deux fibres optiques autrement que par la réflexion totale interne.

10. Dispositif selon la revendication 1 équipé d'une série de fibres en faisceau, de longueurs différentes, connectées à la source, le signal de sortie de la fibre fluorescente reliée au capteur variant pas à pas avec le niveau de fluide.

11. Dispositif selon la revendication 1, caractérisé en ce que la fibre reliée au capteur comporte des segments fluorescents discrets liés alternativement avec des segments non fluorescents, la sortie par ce moyen variant pas à pas avec le niveau de fluide, la fibre connectée à la source étant une fibre à ligne unique.

12. Dispositif selon la revendication 1, les fibres étant aménagées à l'intérieur du substrat. de sorte que la lumière émise à partir de la fibre connectée à la source éclaire le coeur du substrat, qui est utilisé comme un plus grand guide d'onde, et (a) est couplé à la fibre reliée au capteur lorsque la réflexion totale interne se produit à l'interface substrat-fluide, ce qui est le cas si l'indice est relativement bas ou (b) n'est pas couplé à la fibre reliée au capteur lorsque la réfraction se produit à l'interface substrat-fluide, ce qui est le cas lorsqu'on a affaire au second des indices de réfraction le plus élevé, celui le fluide dont le niveau est à mesurer.

13. Dispositif suivant la revendication 12, dans lequel la fibre connectée à la source est construite pour émettre une longueur d'onde particulière ou une plage de longueur d'onde de lumière de façon à provoquer une fluorescence de longueur d'onde plus longue dans ladite fibre reliée au capteur seulement lorsque la réflexion totale interne se produit à l'intérieur du substrat.

14. Dispositif selon la revendication 13, dans lequel le substrat, ou guide d'onde, est circulaire en coupe transversale.

15. Dispositif selon la revendication 14, dans lequel la fibre fluorescente reliée au capteur qui s'étend longitudinalement par rapport au capteur est positionnée de façon excentrée par rapport à l'axe central de façon à intercepter les rayons optiques prédominants.

16. Dispositif selon la revendication 14, dans lequel la fibre fluorescente reliée au capteur s'étend de manière hélicoïdale le long et autour du capteur sur sa longueur de façon à intercepter les rayons optiques prédominants.

17. Dispositif selon la revendication 16, dans lequel le pas de l'hélice de la fibre reliée au capteur diminue pour compenser l'atténuation de la source de lumiére sur la longueur du capteur, ou est variable pour fournir une réponse linéaire en cas de conteneur de formes irrégulières.

18. Dispositif selon la revendication 14, dans lequel la fibre fluorescente reliée au capteur est protégée de l'éclairage de la source près du sommet du capteur dans la région où le substrat, ou coeur de guide d'onde, n'est pas encore complètement et uniformément éclairé.

19. Dispositif selon la revendication 14, dans lequel l'extrémité du substrat opposée à la source est réfléchissante pour procurer une augmentation brutale de fluorescence lorsque le niveau de fluide descend au-dessous de l'extrémité du substrat.

20. Dispositif selon la revendication 14, dans lequel l'extrémité du substrat opposée à la source est rendue non réfléchissante pour simplifier les besoins de linéarisation.

21. Dispositif selon la revendication 13, dans lequel la fibre connectée à la source fait un angle tel que son ouverture numérique, ou sortie de cône de lumière, satisfait aux principes de réflexion totale interne à l'intérieur du substrat, à moins que le fluide à capter ne soit présent.

22. Dispositif selon la revendication 14, dans lequel chaque fibre connectée à la source constituée d'un faisceau de fibres est évasée radialement pour éclairer de façon plus uniforme le coeur du substrat et augmenter le niveau de lumière pour améliorer la performance du capteur.

23. Dispositif selon les revendications 15, 16 ou 22, dans lequel la fibre reliée au capteur comporte des segments de matière dopée pour la fluorescence, séparés par des segments de fibres non fluorescentes.

24. Dispositif selon la revendication 22, dans lequel les fibres qui composent le faisceau reliées à la source sont coupées à des longueurs différentes et montées à des distances différentes le long du substrat.

25. Dispositif selon la revendication 12, dans lequel deux fibres connectées à la source et deux fibres reliées au capteur sont utilisées pour procurer une insensibilité aux variations d'atténuation de la fibre principale, de l'intensité de source, et de la sensibilité du capteur.

FIGURE 1

FIGURE 2A

FIGURE 2A

FIGURE 3A

FIGURE 3B

FIGURE 4

CLADDING

SHORT WAVELENGTH

8    13    CORE

9    10    9

WAVEGUIDE
ACCEPTANCE CONE

LONGER WAVELENGTH
RADIATION FROM FLUORESCENT SITE

FLUORESCENT SITE

EP 0 334 533 B1

Figure 5

FIGURE 7

FIGURE 8

FIGURE 6

FIG.9

FIG.10

FIG.12

FIG.11